# EUROPÄISCHE PATENTSCHRIFT

(11) **EP 0 761 519 B1**
(45) Veröffentlichungstag und Bekanntmachung des Hinweises auf die Patenterteilung: **12.12.2001**
(21) Anmeldenummer: 96114352.6
(22) Anmeldetag: 07.09.1996
(51) Int. Cl.: B60T 13/16, F16D 55/224, B60T 8/44

(54) **Hydraulische Bremsanlage, insbesondere für Kraftfahrzeuge**
Hydraulic brake system for vehicles
Système de freinage hydraulique pour véhicules

(30) Priorität: 12.09.1995 DE 19533481; 08.05.1996 DE 19618489
(43) Veröffentlichungstag der Anmeldung: 12.03.1997
(60) Teilanmeldung: 99116531.7
(73) Patentinhaber: FTE automotive GmbH, 96106 Ebern (DE)
(72) Erfinder: Heubner, Wilhelm, Dipl.-Ing., 96274 Kaltenbrunn (DE)
(74) Vertreter: Oppermann, Ewald, Dipl.-Ing.

(56) Entgegenhaltungen:
- EP-A- 0 169 178
- EP-A- 0 265 623
- DE-A- 2 450 874
- DE-A- 3 538 330
- DE-A- 3 626 292
- DE-A- 3 627 809
- DE-A- 3 638 510
- DE-A- 3 705 311
- DE-A- 3 744 070

## Beschreibung

Die Erfindung bezieht sich auf eine hydraulische Bremsanlage gemäß dem Oberbegriff des Patentanspruchs 1. Insbesondere bezieht sich die Erfindung auf eine hydraulische Hilfskraft- bzw. Fremdkraft-Bremsanlage für Kraftfahrzeuge, bei der die Servokraft am Zuspannorgan über einen beim Durchströmen eines Regelventils mit einem Druckmittel erzeugten Staudruck aufgebracht wird, der durch Ansteuern des Regelventils mittels einer Betätigungseinrichtung definiert eingestellt werden kann.

Hydraulische Bremsanlagen für Kraftfahrzeuge werden heutzutage üblicherweise als Hilfskraft-Bremsanlage oder Fremdkraft-Bremsanlage ausgeführt. Bei einer Hilfskraft-Bremsanlage geht die zur Erzeugung der Bremskraft benötigte Energie von der physischen Kraft des Fahrzeugführers und einer oder mehreren Energieversorgungseinrichtungen aus, d.h. beim Bremsvorgang wird ein Teil der Bremskraft über einen mit einem manuell betätigbaren Bremspedal verbundenen Geberzylinder direkt an den Zuspannorganen aufgebracht, während der andere Teil der Bremskraft als Servokraft von beispielsweise einer Hydraulikpumpe aufgebracht wird. Im Gegensatz dazu geht bei einer Fremdkraft-Bremsanlage die zur Erzeugung der Bremskraft benötigte Energie von einer oder mehreren Energieversorgungseinrichtungen, ausgenommen der physischen Kraft des Fahrzeugführers, aus, d.h. der mit dem Bremspedal verbundene Geberzylinder dient nicht einer direkten Aufbringung der Bremskraft an den Zuspannorganen, sondern lediglich der Ansteuerung der an den Zuspannorganen angreifenden Servokraft.

Aus der DE-AS 1 134 904 ist ein Bremskraftverstärker für eine Fremdkraft-Bremsanlage bekannt, bei der die Servokraft über ein Druckumlaufsystem erzeugt wird. Dazu hat der Bremskraftverstärker eine an den Ausgang einer Hydraulikpumpe angeschlossene Druckkammer, die mit den Zuspannorganen verbunden ist, und eine an einen Vorratsbehälter angeschlossene Ablaufkammer, die über ein Drosselventil mit der Druckkammer verbunden ist. Das Drosselventil weist einen Ventilkörper auf, der zusammen mit einer im Bremskraftverstärker ortsfest angeordneten Buchse den Ventilspalt des Drosselventils begrenzt und mit dem Bremspedal verbunden ist, so daß der Ventilspalt des Drosselventils in Abhängigkeit von der Stellung des Bremspedals verstellbar ist, um einen zum Hub des Bremspedals proportionalen Staudruck in der Druckkammer zu erzeugen. Der Staudruck wird über einen in der Druckkammer geführten Kolben mit einer Durchflußöffnung den Zuspannorganen zugeführt.

Bei Ausfall der Hydraulikpumpe ist zur Erzeugung der erforderlichen Restbremskraft eine mechanische Ansteuerung des Bremskreises möglich, wozu ein weiteres Ventilelement vorgesehen ist, das mit dem Ventilkörper zur Anlage gebracht werden kann, wenn dieser soweit in die Buchse verschoben wurde, daß das Drosselventil verschlossen ist. Das weitere Ventilelement ist nun über den Ventilkörper gegen die Kraft einer Rückstellfeder in Richtung auf den in der Druckkammer geführten Kolben verschiebbar, um die Durchflußöffnung in dem Kolben zu verschließen, so daß die Zuspannorgane über den Kolben ansteuerbar sind.

Neben dem Nachteil, daß die Integration der Restbremsfunktion in dem Bremskraftverstärker gemäß diesem Stand der Technik mit einer hohen Anzahl von Bauteilen und einem großen Bauraum vorrichtungstechnisch relativ aufwendig gelöst ist, besteht hier das Problem, daß bei Ausfall der Servokraft der relativ große Hub des Drosselventils erst überfahren werden muß, um den Bremskreis zur Erzeugung der erforderlichen Restbremskraft mechanisch anzusteuern, so daß die Bremse bei Ausfall der Servokraft ungewohnt spät anspricht, was zu gefahrenträchtigen Situationen führen kann.

Derartige Bremskraftverstärker, die mit einem Drosselventil nach dem Staudruckprinzip arbeiten, sind gemäß der DE-PS 1 180 259 auch für Hilfskraft-Bremsanlagen bekannt. Der in der DE-PS 1 180 259 offenbarte Bremskraftverstärker unterscheidet sich von dem oben beschriebenen Bremskraftverstärker im wesentlichen dadurch, daß der in der Druckkammer angeordnete Kolben von dem mit dem Bremspedal verbundenen Ventilkörper auch im normalen Bremsbetrieb mechanisch beaufschlagt wird, während anstelle des weiteren Ventilelements ein Rückschlagventil in der Durchflußöffnung des Kolbens angeordnet ist, das entgegen der Betätigungsrichtung des Ventilkörpers in seine geschlossene Stellung vorgespannt ist und dem Druckmittel den Weg nur in Richtung auf die Zuspannorgane freigibt.

Ferner ist ein zusätzlicher Druckraum mit einem darin aufgenommenen weiteren Kolben vorgesehen, der zwischen dem Ventilkörper des Drosselventils und dem Kolben in der Druckkammer angeordnet ist, um eine. dem Staudruck proportionale Reaktionskraft am Ventilkörper und somit am Bremspedal aufzubringen. Diese Rückmeldung des am Drosselventil anliegenden Staudrucks zum Bremspedal hin ist notwendig, um eine gefühlvolle Betätigung des Bremspedals unter Berücksichtigung des jeweils in den Zuspannorganen herrschenden Bremsdrucks zu ermöglichen.

Obgleich bei diesem Stand der Technik durch direkte mechanische Beaufschlagung des Kolbens in der Druckkammer auch bei Ausfall der Servokraft ein sofortiges Ansprechen der Bremse gewährleistet wird, ist ein Nachteil dieses Bremskraftverstärkers darin zu sehen, daß bei der gewählten direkten mechanischen Beaufschlagung des Kolbens die Rückmeldung des am Drosselventil anliegenden Staudrucks zum Bremspedal hin einen relativ großen vorrichtungstechnischen Aufwand, d.h. eine große Anzahl von Bauteilen sowie ventilseitig einen großen Bauraum erfordert. Zudem ist bei Betätigung des Bremspedals die Masse des weiteren Kolbens mit zu bewegen und die Reibkraft zwischen dem weiteren Kolben und der Innenwandung des zusätzlichen Druckraums zu überwinden, was bei Ausfall der Servokraft die zur Erzeugung der erforderlichen Restbremskraft am Bremspedal benötigte Betätigungskraft zusätzlich erhöht.

Desweiteren zeigt die DE-PS 1 037 287 einen Bremskraftverstärker für eine Fremdkraft-Bremsanlage, bei der der Bremskreis vom Servokreis getrennt ist. Auch dieser Stand der Technik arbeitet mit einem Drosselventil nach dem Staudruckprinzip. Durch die Ablaufkammer dieses Bremskraftverstärkers erstreckt sich ein Ventilkörper hindurch, dessen eines Ende von dem mit dem Bremspedal verbundenen Geberzylinder hydraulisch ansteuerbar ist, und dessen anderes Ende in die Druckkammer des Servokreises hineinragt. Der Ventilkörper ist am in die Druckkammer des Servokreises hineinragenden Ende mit einer mittigen Sackbohrung versehen, an deren Grund eine Querbohrung angebracht ist, um die Druckkammer des Servokreises mit der Ablaufkammer zu verbinden. Das in die Druckkammer des Servokreises hineinragende Ende des Ventilkörpers bildet mit dem Boden eines konzentrisch zum Ventilkörper angeordneten Plungerkolbens, der sich abgedichtet durch eine Trennwand zwischen der Druckkammer des Servokreises und der Druckkammer des Bremskreises hindurch erstreckt, das Drosselventil aus.

Obgleich dieser Stand der Technik den Vorteil hat, daß durch Trennung des Servokreises von dem Bremskreis eine bereits im Kraftfahrzeug vorhandene Servoquelle mit beispielsweise einem anderen Betriebsmedium für den Servokreis genutzt werden kann, bestehen hier Probleme hinsichtlich der wegabhängigen Steuerung des Ventilspalts des Drosselventils. Einerseits ist die geberzylinderseitige hydraulische Wirkfläche des Ventilkörpers zu klein, um bei Ausfall der Servokraft die erforderliche Restbremskraft mit angemessener Betätigungskraft am Bremspedal über den Geberzylinder hydraulisch aufzubringen. Andererseits ist die geberzylinderseitige hydraulische Wirkfläche des Ventilkörpers so groß, daß sie im normalen Bremsbetrieb einen großen Druckmittelbedarf bzw. Hub am Geberzylinder mit entsprechend hoher Betätigungskraft am Bremspedal erfordert, um den Ventilspalt des Drosselventils und somit die Servokraft einzustellen. Auch führt während des normalen Bremsbetriebs der sich bei Verschiebung des Ventilkörpers durch Druckbeaufschlagung über den Geberzylinder zum Plungerkolben hin am Ventilspalt des Drosselventils einstellende Regelvorgang dazu, daß das mit der Betätigungskraft beaufschlagte Bremspedal nachgibt, was auch als Weglaufen des Bremspedals bezeichnet wird. Im Ergebnis ist festzuhalten, daß sowohl bei normalem Bremsbetrieb mit Servounterstützung als auch bei Ausfall der Servokraft der in den Zuspannorganen wirkende Bremsdruck nicht hinreichend feinfühlig über das Bremspedal eingestellt werden kann, so daß ein gutes Betätigungs- bzw. Pedalgefühl nicht gegeben ist.

Ferner sind beispielsweise aus der DE 39 05 044 A1 oder der DE 43 22 292 A1 Druckmodulatoren für Hilfskraft- oder Fremdkraft-Bremsanlagen bekannt, mittels derer zur Aufbringung einer betätigungskraftproportionalen Servokraft der Druck einer Hydraulikpumpe nach dem Reaktionsdruckprinzip regelbar ist. Ein solcher Druckmodulator ist in den Servokreis der Bremsanlage geschaltet und weist ein Ventilgehäuse auf, in dem ein Ventilkolben gleitbeweglich angeordnet ist. Die eine Seite des Ventilkolbens begrenzt eine Steuerkammer, die mit dem an das Bremspedal angeschlossenen Geberzylinder hydraulisch verbunden ist, während die andere Seite des Ventilkolbens eine Druckkammer begrenzt. Die Druckkammer ist über eine Druckleitung an eine Hydraulikpumpe angeschlossen und hat einen Auslaß, der mit einem Vorratsbehälter verbunden ist und mittels einer am Ventilkolben angeformten Sitzfläche verschlossen werden kann. Die die Druckkammer mit der Hydraulikpumpe verbindende Druckleitung weist einen Abzweig auf, der im Falle der DE 39 05 044 A1 hydraulisch mit den Zuspannorganen verbunden ist oder im Falle der DE 43 22 292 A1 zu einem Bremskraftverstärker führt.

Im Betrieb einer derartig aufgebauten Bremsanlage wird mit Betätigen des Bremspedals in der Steuerkammer des Druckmodulators ein Druck erzeugt, der den Ventilkolben verschiebt, so daß die Sitzfläche des Ventilkolbens den Auslaß der Druckkammer verschließt. Dies hat zur Folge, daß am Ausgang der Hydraulikpumpe ein Druck aufgebaut wird, der über den Abzweig auch an den Zuspannorganen bzw. im Bremskraftverstärker wirkt. Sobald der Druck am Ausgang der Hydraulikpumpe und somit in der Druckkammer des Druckmodulators dem Druck in der Steuerkammer entspricht, wird der Ventilkolben vom Auslaß der Druckkammer zurückgedrängt, so daß überschüssiges Druckmittel in den Vorratsbehälter gefördert wird. Es stellt sich ein Regelvorgang ein, der den Druck am Ausgang der Hydraulikpumpe in Abhängigkeit vom Druck in der Steuerkammer bestimmt.

Ein Nachteil dieses Stands der Technik ist darin zu sehen, daß im Falle der DE 39 05 044 A1 die Regelung des Servodrucks mittels des Druckmodulators durch Verschiebung des Ventilkolbens vom Auslaß der Druckkammer weg unter Verkleinerung des Volumens der Steuerkammer auf den Geberzylinder zurückwirkt, so daß Regelungsdruckstöße am Bremspedal zu verspüren sind, bzw. im Falle der DE 43 22 292 A1 die Rückwirkungsfreiheit des Regelvorgangs im Druckmodulator mit großem technischen Aufwand unter Zuhilfenahme einer Sperrkammer im Bremskraftverstärker und weiteren Ventilen gewährleistet werden muß.

Weiterhin ist beispielsweise aus der DE 36 03 074 C2 oder der DE 37 02 573 A1 die Verwendung elektromagnetisch angesteuerter Kugelsitzventile in Druckmodulatoren für hydraulische Bremsanlagen mit Antiblockiersystem (ABS) prinzipiell bekannt. Bei diesen Druckmodulatoren arbeitet das Kugelsitzventil als Schaltventil, dessen Ventilkugel mittelbar über einen elektromagnetisch verstellbaren Druckentlastungskolben des Druckmodulators oder unmittelbar durch einen eigens dafür vorgesehenen Elektromagneten verschoben werden kann, um die Verbindung zwischen dem Geberzylinder und dem Radbremszylinder zu unterbrechen, so daß während des ABS-Betriebs der Bremsdruck im Radbremszylinder über den Druckentlastungskolben unabhängig vom Druck im Geberzylinder regelbar ist.

Die den Oberbegriff des Patentanspruchs 1 bildende DE 35 38 330 A1 offenbart schließlich eine hydraulische Bremsanlage, die als Bremsdruckgeber einen über ein Bremspedal ansteuerbaren Tandem-Hauptzylinder mit lediglich zwei Arbeitskammern hat. Die eine Arbeitskammer des Bremsdruckgebers ist über einen ersten Druckmittelkreis sowohl an eine erste Zuspanneinheit einer Radbremse als auch an eine Steuerkammer eines Hilfsdruckregelventils angeschlossen, durch das ein Kugelsitzventil betätigt wird, um eine zweite Zuspanneinheit der Radbremse über einen zweiten geregelten Druckmittelkreis hilfskraftunterstützt anzusteuern. Die zweite Arbeitskammer des Bremsdruckgebers ist über einen dritten Druckmittelkreis sowohl an eine erste Zuspanneinheit einer weiteren Radbremse als auch an eine zweite Steuerkammer des Hilfsdruckregelventils angeschlossen, die bei Ausfall des ersten Druckmittelkreises in Funktion tritt. Eine zweite Zuspanneinheit der weiteren Radbremse wird schließlich ebenfalls über den zweiten geregelten Druckmittelkreis hilfskraftunterstützt angesteuert.

Ein Nachteil dieses Stands der Technik ist darin zu sehen, daß bezogen auf eine Radbremse das aus der Arbeitskammer des Bremsdruckgebers verschobene Druckmittelvolumen sowohl für die direkte Ansteuerung der ersten Zuspanneinheit der Radbremse als auch für die hilfskraftunterstützte Ansteuerung der zweiten Zuspanneinheit der Radbremse verbraucht wird, so daß das Betätigungsgefühl am Bremspedal bzw. das Ansprechverhalten der Bremsanlage jedenfalls noch verbesserungsbedürftig ist. Hinzu kommt, daß bei dem beschriebenen Aufbau der Bremsanlage im blockiergeregelten Betrieb (elektromagnetische Ventile) eine Rückwirkung der Regelvorgänge auf das Bremspedal unvermeidbar ist.

Zusammenfassend ist festzuhalten, daß die bekannten Hilfskraft- oder Fremdkraft-Bremsanlagen, bei denen die Servokraft über eine Hydraulikpumpe nach dem Stau- bzw. Reaktionsdruckprinzip erzeugt wird, im Hinblick auf eine befriedigende Rückmeldung des in den Zuspannorganen anstehenden Bremsdrucks an das Bremspedal, einem angemessenen Betätigungskraftbedarf am Bremspedal bei ausreichender Bremskraft an den Zuspannorganen sowie rückwirkungsfreie Regelungsvorgänge im Servokreis verbesserungsbedürftig sind.

Gegenüber dem oben beschriebenen Stand der Technik liegt der Erfindung daher die Aufgabe zugrunde, eine einfach aufgebaute hydraulische Hilfskraft- bzw. Fremdkraft-Bremsanlage zu schaffen, mittels derer sowohl im normalen Bremsbetrieb als auch bei Ausfall der Servokraft eine ausreichende Bremskraft an den Zuspannorganen bei gutem Pedalgefühl aufgebracht werden kann.

Diese Aufgabe wird durch die im Patentanspruch 1 angegebenen Merkmale gelöst. Vorteilhafte Weiterbildungen der Erfindung sind Gegenstand der Patentansprüche 2 bis 5.

Erfindungsgemäß dient bei einer hydraulischen Bremsanlage mit einem an einer Betätigungseinrichtung angeschlossenen Geberzylinder, der nur zwei Druckkammern aufweist, und mindestens einem Zuspannorgan, welches zwei Kolben-Zylinder-Anordnungen hat, wobei die erste Kolben-Zylinder-Anordnung in einem Servokraft-Bremsbetrieb mittelbar und die zweite Kolben-Zylinder-Anordnung direkt über den Geberzylinder ansteuerbar ist, um am Zuspannorgan auch bei Ausfall der Servokraft eine Bremskraft aufzubringen, die erste Druckkammer des Geberzylinders ausschließlich der hydraulischen Ansteuerung eines im Servokraft-Bremsbetrieb von einem Druckmittel zwangsdurchströmten Drosselventils, um dessen Drosselquerschnitt zur Erzeugung eines definierten Staudrucks einzustellen, der der ersten Kolben-Zylinder-Anordnung des Zuspannorgans anlegbar ist, während die zweite Druckkammer des Geberzylinders von den Kolben-Zylinder-Anordnungen dieses Zuspannorgans nur mit der zweiten Kolben-Zylinder-Anordnung hydraulisch verbindbar ist.

Durch die erfindungsgemäß vorgesehene funktionale Trennung des Servokreises von dem manuell ansteuerbaren Bremskreis mit zwei getrennten Kolben-Zylinder-Anordnungen im Zuspannorgan sowie der hydraulischen Ansteuerung des Drosselventils zur Erzeugung des Staudrucks unter Zwangsdurchströmung des Drosselquerschnitts wird sowohl im Servokraft-Bremsbetrieb als auch bei Ausfall der Servokraft eine ausreichende Bremskraft am Zuspannorgan aufgebracht und eine angemessene Rückmeldung der Bremskräfte an die Betätigungseinrichtung bewirkt, so daß stets ein gutes Betätigungs- bzw. Pedalgefühl gegeben ist.

Die wie oben beschrieben ausgebildete hydraulische Bremsanlage gemäß der Erfindung hat insbesondere den Vorteil großer räumlicher Flexibilität, d.h. die einzelnen Bauelemente, wie das Drosselventil oder die Hydraulikpumpe, sind nicht an eine bestimmte Position im Kraftfahrzeug, z.B. am Bremspedal, gebunden, sondern können auch an einer anderen Stelle im Kraftfahrzeug angeordnet werden. Auch können zur Erfüllung weiterer Funktionen wie Antiblockierregelung (ABS), Antischlupfregelung (ASR) oder Fahrdynamikregelung weitere Bauelemente leicht mit in die funktional gegliederte hydraulische Bremsanlage integriert werden. Schließlich sinkt gegenüber dem eingangs geschilderten Stand der Technik der vorrichtungstechnische Aufwand insgesamt, da aufgrund der oben angesprochenen funktionalen Trennung die einzelnen Bauelemente zur Erfüllung nur weniger Funktionen einfacher ausgebildet werden können.

Mit den im Patentanspruch 2 angegebenen Merkmalen wird ein besonders an die hydraulische Bremsanlage gemäß dem Patentanspruch 1 angepaßtes Zuspannorgan mit zwei Kolben-Zylinder-Anordnungen geschaffen, das aufgrund der konzentrischen Anordnung der zwei Kolben-Zylinder-Anordnungen in vorteilhafter Weise nicht größer als ein herkömmlicher Bremssattel ist.

Die in den Patentansprüchen 3 und 5 angegebenen Merkmale schaffen ein Baukastensystem, mittels dessen die erfindungsgemäße hydraulische Bremsanlage auf einfache Weise um ABS, ASR und/oder eine Fahrdynamikregelung erweitert werden kann, wobei die zusätzlichen Regelungen im ABS-Regelfall im wesentlichen rückwirkungsfrei durchgeführt werden können, so daß auch dann ein gutes Pedalgefühl gewährleistet bleibt.

Gemäß dem Patentanspruch 4 ist das Drosselventil vorteilhaft als Kugelsitzventil ausgebildet, so daß sich der Drosselquerschnitt zur Erzeugung eines definierten Staudrucks zuverlässig und präzise einstellen läßt. Ferner ist der Einsatz eines Kugelsitzventils kostengünstig.

Die Erfindung wird nachstehend anhand bevorzugter Ausführungsbeispiele unter Bezugnahme auf die Zeichnungen näher erläutert, wobei gleiche oder ähnliche Teile mit gleichen Bezugszeichen versehen sind. Dabei zeigen:
Die Fig. 1 eine prinzipielle Darstellung eines ersten Ausführungsbeispiels der erfindungsgemäßen Bremsanlage, die als Hilfskraft-Bremsanlage ausgeführt ist, mit paralleler Anordnung von zwei Kolben-Zylinder-Anordnungen im Bremssattel,
die Fig. 2 eine teilweise geschnittene Ansicht eines bevorzugten Bremssattels für die Bremsanlage gemäß Fig. 1, mit einem Ringkolben, der sowohl den Kolben der einen Kolben-Zylinder-Anordnung als auch den Zylinder der anderen Kolben-Zylinder-Anordnung ausbildet,
die Fig. 3 eine prinzipielle Darstellung eines zweiten Ausführungsbeispiels der erfindungsgemäßen Bremsanlage, die gegenüber dem ersten Ausführungsbeispiel zusätzliche Bauelemente für eine Antiblockierregelung (ABS) aufweist, und
die Fig. 4 eine prinzipielle Darstellung eines dritten Ausführungsbeispiels der erfindungsgemäßen Bremsanlage, die gegenüber dem ersten bzw. zweiten Ausführungsbeispiel zusätzliche Bauelemente für eine Antischlupfregelung (ASR) und eine Fahrdynamikregelung aufweist.

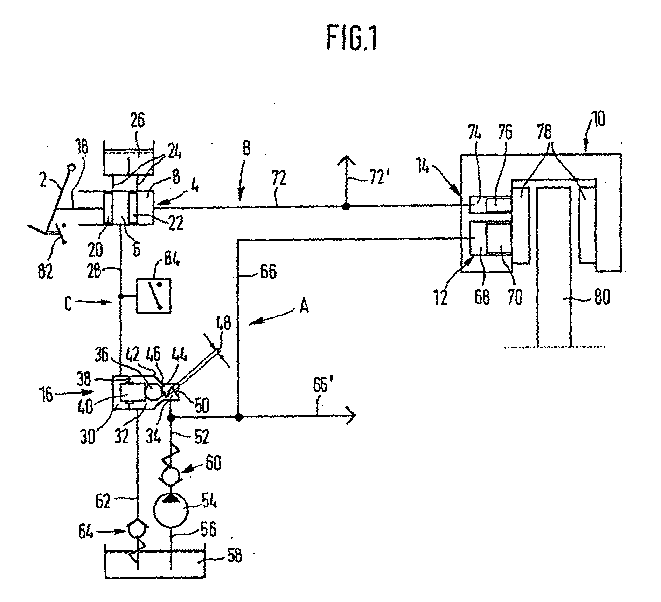

Gemäß der Fig. 1 hat eine hydraulische Hilfskraft-Bremsanlage ein als Betätigungseinrichtung dienendes Bremspedal 2, das an einen Geberzylinder 4, beispielsweise einen Tandem-Hauptzylinder, angeschlossen ist, der zwei Druckkammern 6, 8 aufweist. Ferner ist ein als Zuspannorgan dienender Bremssattel 10 vorgesehen, der mit zwei Kolben-Zylinder-Anordnungen 12, 14 versehen ist. Die erste Druckkammer 6 des Geberzylinders 4 dient der hydraulischen Ansteuerung eines Drosselventils 16, das im servounterstützten Bremsbetrieb von einem Druckmittel zwangsdurchströmt wird und mit der ersten Kolben-Zylinder-Anordnung 12 des Bremssattels 10 hydraulisch verbunden ist. Über die erste Druckkammer 6 des Geberzylinders 4 kann der Drosselquerschnitt des Drosselventils 16 zur Erzeugung eines definierten Staudrucks hydraulisch eingestellt werden, welcher der ersten Kolben-Zylinder-Anordnung 12 des Bremssattels 10 zur Aufbringung einer Bremskraft anliegt. Die zweite Druckkammer 8 des Geberzylinders 4 ist mit der zweiten Kolben-Zylinder-Anordnung 14 des Bremssattels 10 hydraulisch verbunden, so daß am Bremssattel 10 eine Bremskraft auch bei Ausfall der Servo- unterstützuhg aufgebracht werden kann.

Das Bremspedal 2 ist über eine Kolbenstange 18 mit einem ersten Kolben 20 des Geberzylinders 4 wirkverbunden, der die erste Druckkammer 6 bremspedalseitig hydraulisch begrenzt. Zwischen der ersten Druckkammer 6 und der zweiten Druckkammer 8 ist ein zweiter Kolben 22 angeordnet, der die erste und die zweite Druckkammer 6, 8 hydraulisch voneinander trennt. Die erste und die zweite Druckkammer 6, 8 sind jeweils über einen Anschluß 24 mit einem Ausgleichsbehälter 26 verbunden.

Die erste Druckkammer 6 des Geberzylinders 4 ist über eine Steuerleitung 28 mit einer Steuerkammer 30 des Drosselventils 16 verbunden, welches als dreikammeriges 2/2 Kugelsitzventil mit hydraulischer Ansteuerung ausgebildet ist, das neben der Steuerkammer 30 eine Ablaufkammer 32 und eine Druckkammer 34 aufweist. In der Ablaufkammer 32 ist ein Ventilkörper 36 in Form einer metallischen Kugel angeordnet, der über einen sich abgedichtet durch eine Wandung 38 zwischen der Steuerkammer 30 und der Ablaufkammer 32 hindurch erstreckenden, axial verschiebbaren Steuerkolben 40 mechanisch mit einer Kraft beaufschlagt werden kann. Der Ventilkörper 36 kann über den Steuerkolben 40 nur mit einer Druckkraft beaufschlagt werden, da es sich bei dem Ventilkörper 36 und dem Steuerkolben 40 um zwei separate Bauteile handelt. In einer Wandung 42 zwischen der Ablaufkammer 32 und der Druckkammer 34 ist eine Durchgangsbohrung 44 vorgesehen, die die Ablaufkammer 32 und die Druckkammer 34 hydraulisch miteinander verbindet. An der Durchgangsbohrung 44 ist ablaufkammerseitig ein ringförmiger Dichtsitz 46 angebracht, der zusammen mit dem Ventilkörper 36 einen Ventilspalt 48 begrenzt, dessen Durchflußquerschnitt dem Drosselquerschnitt des Drosselventils 16 entspricht. In der Druckkammer 34 ist eine Rückstellfeder 50 angeordnet, die sich durch die Durchgangsbohrung 44 hindurch erstreckt und den Ventilkörper 36 gegen den Steuerkolben 40 drückt. Liegt in der Steuerkammer 30 kein Steuerdruck an, so wird der Steuerkolben 40 durch die Rückstellfeder 50 über den Ventilkörper 36 in seiner Ausgangsstellung gehalten, wobei der Ventilspalt 48 maximal geöffnet ist (Durchgangs-Null-Stellung des Drosselventils 16).

Die Druckkammer 34 des Drosselventils 16 ist über eine Druckleitung 52 hydraulisch an den Ausgang einer Hydraulikpumpe 54 angeschlossen, deren Eingang über eine Ansaugleitung 56 mit einem Vorratsbehälter 58 für das Druckmittel, vorzugsweise Bremsflüssigkeit, verbunden ist. In die Druckleitung 52 ist ein Rückschlagventil 60 geschaltet, das in Richtung auf die Hydraulikpumpe 54 vorgespannt ist. Die Ablaufkammer 32 des Drosselventils 16 ist über eine Rücklaufleitung 62 mit dem Vorratsbehälter 58 verbunden. In die Rücklaufleitung 62 ist ein Druckhalteventil 64 geschaltet, das in Richtung auf die Ablaufkammer 32 vorgespannt ist.

Von der Druckleitung 52 zweigt zwischen dem Rückschlagventil 60 und der Druckkammer 34 des Drosselventils 16 eine Druckleitung 66 ab, die an die Druckkammer 68 der ersten Kolben-Zylinder-Anordnung 12 des Bremssattels 10 angeschlossen ist, so daß der Kolben 70 der ersten Kolben-Zylinder-Anordnung 12 mit dem mittels der Hydraulikpumpe 54 erzeugten und über das Drosselventil 16 gesteuerten Staudruck beaufschlagt werden kann.

Die zweite Druckkammer 8 des Geberzylinders 4 ist über eine Druckleitung 72 direkt an die Druckkammer 74 der zweiten Kolben-Zylinder-Anordnung 14 des Bremssattels 10 angeschlossen, so daß der Kolben 76 der zweiten Kolben-Zylinder-Anordnung 14 mit dem durch Niederdrücken des Bremspedals 2 über den zweiten Kolben 22 des Geberzylinders 4 in der zweiten Druckkammer 8 erzeugten Druck beaufschlagt werden kann.

Der Bremssattel 10, im dargestellten Fall ein Schwimmsattel, ist mit Bremsbelägen 78 versehen, die in an sich bekannter Weise bei Druckbeaufschlagung der ersten bzw. zweiten Kolben-Zylinder-Anordnung 12, 14 durch den Kolben 70 der ersten Kolben-Zylinder-Anordnung 12 bzw. den Kolben 76 der zweiten Kolben-Zylinder-Anordnung 14 gegen eine Bremsscheibe 80 gepreßt werden. Im dargestellten Fall sind die erste und die zweite Kolben-Zylinder-Anordnung 12, 14 nebeneinander bzw. parallel zueinander angeordnet, sie können aber auch beispielsweise konzentrisch oder auf bezüglich der Bremsscheibe 80 gegenüberliegenden Seiten des Bremssattels 10 angeordnet werden.

Schließlich ist ein über das Bremspedal 2 mechanisch betätigbarer Pedalschalter 82 und/oder ein in die Steuerleitung 28 geschalteter elektro-hydraulischer Druckschalter 84 vorgesehen, deren Funktion im folgenden noch erläutert wird.

Im Ergebnis bilden die Hydraulikpumpe 54, die Druckleitung 52, das über die Rücklaufleitung 62 an den Vorratsbehälter 58 angeschlossene Drosselventil 16, die Druckleitung 66 und die erste Kolben-Zylinder-Anordnung 12 des Bremssattels 10 einen Fremdkraft-Bremskreis A aus, der über einen hydraulisch davon getrennten Steuerkreis C angesteuert wird, welcher aus dem Kolben 20 des Geberzylinders 4, der ersten Druckkammer 6 des Geberzylinders 4, der Steuerleitung 28, der Steuerkammer 30 des Drosselventils 16 und dem Steuerkolben 40 des Drosselventils 16 besteht, während der zweite Kolben 22 des Geberzylinders 4, die zweite Druckkammer 8 des Geberzylinders 4, die Druckleitung 72 und die zweite Kolben-Zylinder-Anordnung 14 des Bremssattels 10 einen unabhängig vom Fremdkraft-Bremskreis A über das Bremspedal 2 manuell ansteuerbaren Bremskreis B ausbildet.

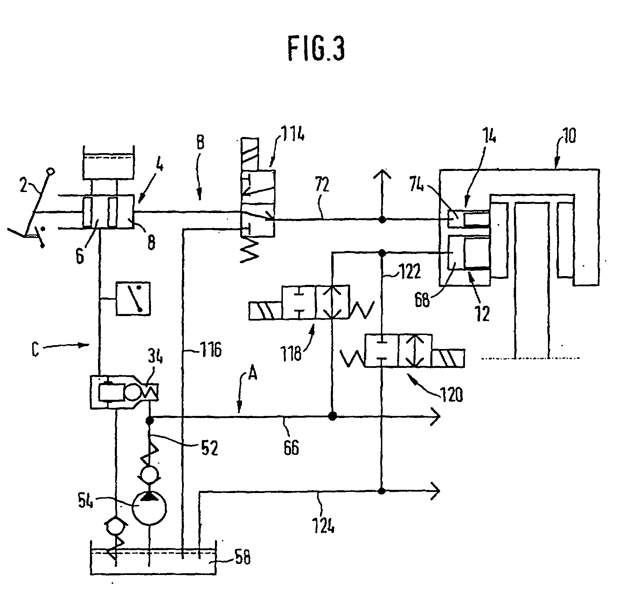

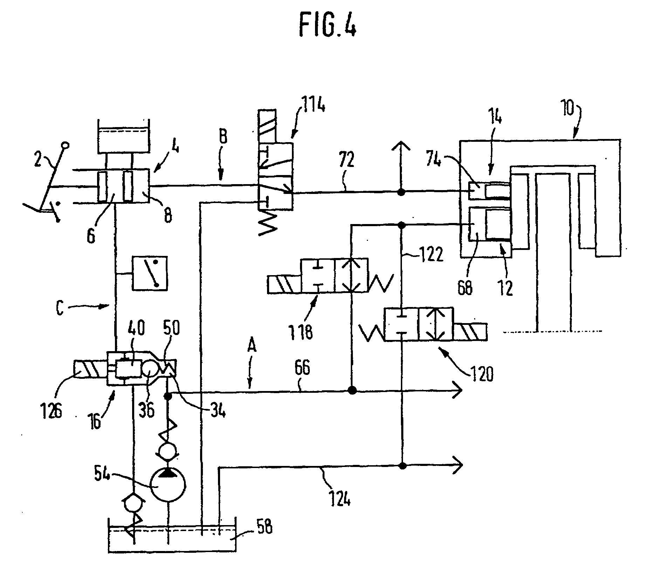

An dieser Stelle bleibt anzumerken, daß in Fig. 1 der Einfachheit halber lediglich eine Grundausführung der Hilfskraft-Bremsanlage mit einem Bremssattel 10 für ein Rad dargestellt ist. Die Kolben-Zylinder-Anordnungen weiterer Bremssättel werden über den Abzweig 66' von der Druckleitung 66, die die Druckleitung 52 zwischen Hydraulikpumpe 54 und Druckkammer 34 des Drosselventils 16 mit der ersten Kolben-Zylinder-Anordnung 12 im Bremssattel 10 verbindet, bzw. über den Abzweig 72' von der Druckleitung 72 zwischen zweiter Druckkammer 8 des Geberzylinders 4 und zweiter Kolben-Zylinder-Anordnung 14 des Bremssattels 10 entsprechend angeschlossen. Dabei ist es beispielsweise denkbar, daß bei einem vierrädrigen Kraftfahrzeug von vier Bremssätteln lediglich zwei Bremssättel jeweils mit zwei Kolben-Zylinder-Anordnungen versehen sind, die über den Fremdkraft-Bremskreis A bzw. den Bremskreis B wie oben beschrieben beaufschlagt werden, während die anderen zwei Bremssättel jeweils nur eine Kolben-Zylinder-Anordnung aufweisen, die über den Fremdkraft-Bremskreis A beaufschlagt wird. Andere Kombinationen sind entsprechend den jeweiligen Erfordernissen ebenfalls möglich. Entsprechendes gilt auch für die in den Fig. 3 und 4 dargestellten Ausführungsbeispiele.

Im folgenden wird die Funktionsweise des ersten Ausführungsbeispiels beschrieben.

Durch Niederdrücken des Bremspedals 2 werden die Kolben 20, 22 des Geberzylinders 4 in den Druckkammern 6, 8 in Fig. 1 nach rechts verschoben und verschließen die Anschlüsse 24 zum Ausgleichsbehälter 26, so daß sich in den Druckkammern 6, 8 ein Druck einstellt, der zu der auf das Bremspedal 2 wirkenden Betätigungskraft proportional ist. Dieser Druck steht nun im Steuerkreis C für den Fremdkraft-Bremskreis A über die Steuerleitung 28 in der Steuerkammer 30 des Drosselventils 16 als Steuerdruck an. Im Bremskreis B liegt dieser Druck über die Druckleitung 72 in der Druckkammer 74 der zweiten Kolben-Zylinder-Anordnung 14 des Bremssattels 10 an.

Im Steuerkreis C verschiebt der in der Steuerkammer 30 des Drosselventils 16 anliegende Steuerdruck den Steuerkolben 40 in Fig. 1 nach rechts und damit den am Steuerkolben 40 durch die Kraft der Rückstellfeder 50 anliegenden Ventilkörper 36 in Richtung auf den Dichtsitz 46. Gleichzeitig wird die Hydraulikpumpe 54 über den durch das Bremspedal 2 betätigten Pedalschalter 82 bzw. mit Überschreiten eines vorbestimmten Signaldrucks im Steuerkreis C über den elektro-hydraulischen Druckschalter 84 gestartet, wozu der Pedalschalter 82 bzw. der elektro-hydraulische Druckschalter 84 ein elektrisches Signal liefert, das einen mit der Hydraulikpumpe 54 antriebsverbundenen Elektromotor (nicht dargestellt) startet oder eine elektromagnetische Kupplung (nicht dargestellt) einkuppelt, die die Hydraulikpumpe 54 mit einer drehenden Welle des Motors oder eines Rads des Kraftfahrzeugs verbindet. Ebenso könnte die Hydraulikpumpe 54 aber auch während der gesamten Gebrauchsdauer des Kraftfahrzeugs betrieben werden.

Die Hydraulikpumpe 54 saugt nun über die Ansaugleitung 56 das Druckmittel aus dem Vorratsbehälter 58 an und fördert es über das Rückschlagventil 60 und die Druckleitung 52 in die Druckkammer 34 des Drosselventils 16. Von der Druckkammer 34 fließt das Druckmittel durch den Ventilspalt 48 in die Ablaufkammer 32 und von da über die Rücklaufleitung 62 sowie das Druckhalteventil 64 zurück in den Vorratsbehälter 58. Da zu Beginn der Betätigung des Bremspedals 2 der Steuerkolben 40 des Drosselventils 16 und somit der Ventilkörper 36 nur geringfügig in Richtung auf den Dichtsitz 46 verschoben sind, so daß der Ventilspalt 48 fast vollständig geöffnet ist, wälzt die Hydraulikpumpe 54 das Druckmittel weitgehend drucklos über das Drosselventil 16 um.

Der Ventilkörper 36 wird nun über den hydraulisch beaufschlagten Steuerkolben 40 entgegen der Kraft der Rückstellfeder 50 weiter in Richtung des Dichtsitzes 46 geschoben, und zwar mit einer Kraft, die gleich dem Produkt des in der Steuerkammer 30 durch den Geberzylinder 4 aufgebrachten Steuerdrucks und der hydraulischen Wirkfläche des Steuerkolbens 40 ist. Bei Annäherung des Ventilkörpers 36 an den Dichtsitz 46 verringert sich der Ventilspalt 48, wodurch sich der Durchflußquerschnitt für das durch die Hydraulikpumpe 54 über die Druckleitung 52 und die Druckkammer 34 umgewälzte Druckmittel verringert. Im Ergebnis wird im Fremdkraft-Bremskreis A in Umlaufrichtung des Druckmittels vor dem Ventilspalt 48 ein Staudruck erzeugt, der sich über die Druckkammer 34, die Druckleitung 52 und die Druckleitung 66 bis zur Druckkammer 68 der ersten Kolben-Zylinder-Anordnung 12 des Bremssattels 10 fortpflanzt, so daß über den Kolben 70 der ersten Kolben-Zylinder-Anordnung 12 und die Bremsbeläge 78 eine Bremskraft an der Bremsscheibe 80 aufgebracht wird.

Der vor dem Ventilspalt 48 erzeugte Staudruck hängt im wesentlichen vom Volumenstrom der Hydraulikpumpe 54 und dem Durchflußwiderstand des Drosselventils 16 ab, ist aber in guter Näherung proportional zu dem in der Steuerkammer 30 des Drosselventils 16 anstehenden Steuerdruck. Der Proportionalitätsfaktor zwischen diesem Steuerdruck und dem vor dem Ventilspalt 48 erzeugten Staudruck ist bestimmt durch das Verhältnis der hydraulischen Wirkfläche des Steuerkolbens 40 in der Steuerkammer 30 zur effektiven hydraulischen Wirkfläche des Ventilkörpers 36 am Dichtsitz 46. Durch entsprechende Dimensionierung dieser Wirkflächen läßt sich einerseits die gewünschte Druckverstärkung im Fremdkraft-Bremskreis A einstellen. Andererseits kann die über die effektive hydraulische Wirkfläche des Ventilkörpers 36 durch den Staudruck am Ventilkörper 36 aufgebrachte Reaktionskraft derart eingestellt werden, daß über die Drucksäule des Steuerkreises C zwischen dem Steuerkolben 40 des Drosselventils 16 und dem ersten Kolben 20 des Geberzylinders 4 eine angemessene Rückmeldung des Staudrucks zum Bremspedal 2 hin erfolgt, um ein gutes Pedalgefühl zu gewährleisten und somit eine gefühlvolle Betätigung des Bremspedals 2 zu ermöglichen. Da der Ventilspalt 48 des Drosselventils 16 kontinuierlich verstellt und im servounterstützten Bremsbetrieb gegen den Staudruck nicht vollständig geschlossen wird, entstehen insbesondere keine Regelungsdruckstöße, die auf das Bremspedal 2 zurückwirken könnten.

Wie oben beschrieben liegt gleichzeitig im Bremskreis B der in der zweiten Druckkammer 8 des Geberzylinders 4 durch Niederdrücken des Bremspedals 2 erzeugte Druck in der Druckkammer 74 der zweiten Kolben-Zylinder-Anordnung 14 des Bremssattels 10 an. Dieser Druck bringt somit über den Kolben 76 der zweiten Kolben-Zylinder-Anordnung 14 und die Bremsbeläge 78 ebenfalls eine Bremskraft an der Bremsscheibe 80 auf. Die am Kolben 76 der zweiten Kolben-Zylinder-Anordnung 14 erzeugte Reaktionskraft wird über die Drucksäule zwischen dem Kolben 76 und dem zweiten Kolben 22 des Geberzylinders 4 sowie die Drucksäule zwischen dem zweiten Kolben 22 und dem ersten Kolben 20 des Geberzylinders 4 der Reaktionskraft im Steuerkreis C überlagert zum Bremspedal 2 zurückgemeldet, so daß eine gefühlvolle Betätigung des Bremspedals 2 unter Berücksichtigung des tatsächlich in dem Bremssattel 10 herrschenden Bremsdrucks möglich ist.

Aus der obigen Beschreibung wird deutlich, daß bei beispielsweise einem Ausfall der Hydraulikpumpe 54 oder Leckagen im Fremdkraft-Bremskreis A die erforderliche Restbremskraft manuell mit angemessener Rückmeldung an das Bremspedal 2 alleine über den vom Fremdkraft-Bremskreis A funktional entkoppelten Bremskreis B an der Bremsscheibe 80 aufgebracht werden kann.

Soll im servounterstützten Bremsbetrieb der Bremsdruck nun reduziert werden, so wird durch Entlasten des Bremspedals 2 der Steuerdruck im Steuerkreis C verringert und der Steuerkolben 40 des Drosselventils 16 fährt zusammen mit dem Ventilkörper 36 unter Vergrößerung des Ventilspalts 48 in seine Ausgangsstellung zurück, wobei er gegen den abbauenden Steuerdruck in der Steuerkammer 30 über den Ventilkörper 36 durch den mit Vergrößerung des Ventilspalts 48 kleiner werdenden Staudruck des umlaufenden Druckmittels in der Druckkammer 34 und die Kraft der Rückstellfeder 50 belastet wird. Mit Unterschreitung des vorbestimmten Signaldrucks im Steuerkreis C am elektro-hydraulischen Druckschalter 84 wird gegebenenfalls die Hydraulikpumpe 54 bzw. deren Antrieb abgeschaltet und somit der Umlauf des Druckmittels beendet. Im Bremskreis B verringert sich der Bremsdruck in der Druckkammer 74 der zweiten Kolben-Zylinder-Anordnung 14 natürlich ebenfalls durch Entlasten des Bremspedals 2.

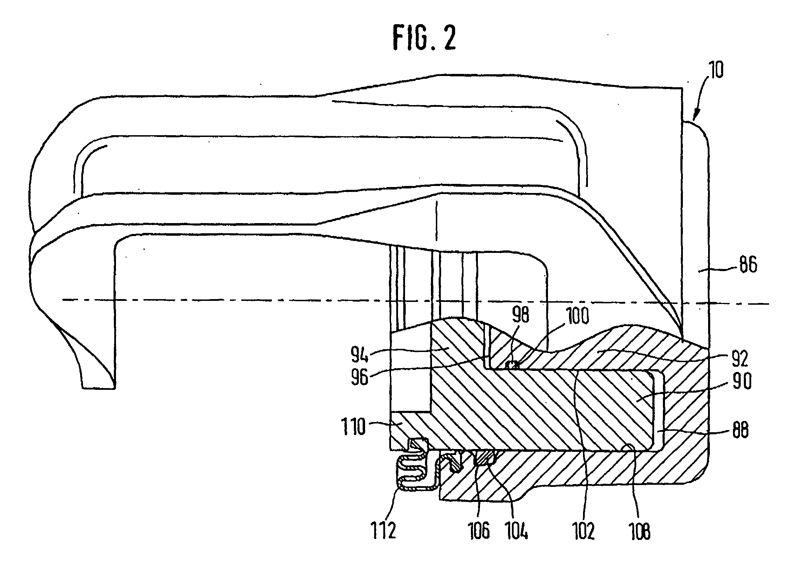

In der Fig. 2 ist ein Bremssattel 10 für die Bremsanlage mit bevorzugter Ausbildung der zwei Kolben-Zylinder-Anordnungen 12, 14 dargestellt, der gleichermaßen im ersten bis dritten Ausführungsbeispiel Verwendung finden kann.

Gemäß Fig. 2 ist in einem Gehäuse 86 des Bremssattels 10 eine Ringkammer 88 ausgebildet, in der ein topfförmiger Ringkolben 90 gleitbeweglich aufgenommen ist. Der Ringkolben 90 liegt an einem zylindrischen Zapfen 92 des Gehäuses 86 gleitbeweglich an, der mit dem Boden 94 des Ringkolbens 90 eine zylindrische Kammer 96 ausbildet. Sowohl die Ringkammer 88 als auch die zylindrische Kammer 96 sind jeweils mit einem Anschluß (nicht dargestellt) versehen, so daß sie an die Druckleitung 66 des Fremdkraft-Bremskreises A bzw. die Druckleitung 72 des Bremskreises B angeschlossen werden können.

Die zylindrische Kammer 96 ist gegenüber der Ringkammer 88 mittels eines Dichtelements 98 hydraulisch abgedichtet, das in einer Nut 100 in der Außenumfangsfläche 102 des Zapfens 92 aufgenommen ist, aber auch an der Innenumfangsfläche des Ringkolbens 90 befestigt sein könnte. Die Ringkammer 88 ist über ein Dichtelement 104 nach außen abgedichtet, das in einer Nut 106 in der Innenumfangsfläche 108 des Gehäuses 86 aufgenommen ist. Der Ringkolben 90 ist an seinem aus dem Gehäuse 86 hervorstehenden Endabschnitt 110 mit dem Gehäuse 86 über eine elastische Manschette 112 verbunden, die verhindert, daß Bremsstaub zwischen der Außenumfangsfläche des Ringkolbens 90 und der Innenumfangsfläche 108 des Gehäuses 86 eindringen kann. Der Ringkolben 90 wirkt in an sich bekannter Weise über seinen Endabschnitt 110 mit Bremsbelägen (nicht dargestellt) zusammen, um an einer Bremsscheibe (nicht dargestellt) eine Bremskraft aufzubringen.

Im Ergebnis bildet das Gehäuse 86 zusammen mit dem Ringkolben 90 die erste und zweite Kolben-Zylinder-Anordnung 12, 14 des Bremssattels 10 in sehr kompakter Bauweise aus, so daß der zweikammerige Bremssattel 10 nicht mehr Bauraum erfordert als ein herkömmlicher einkammeriger Bremssattel. In Abhängigkeit von der Auslegung der Hilfskraft-Bremsanlage ist dabei entweder die Ringkammer 88 oder die zylindrische Kammer 96 über die Druckleitung 66 mit dem Fremdkraft-Bremskreis A verbunden, während die jeweils andere Kammer über die Druckleitung 72 an den Bremskreis B angeschlossen ist.

Gemäß dem in Fig. 3 dargestellten zweiten Ausführungsbeispiel ist die Hilfskraft-Bremsanlage nach Fig. 1 mit weiteren Bauelementen versehen, um eine Antiblockierregelung (ABS) zu ermöglichen. Den Teilen in Fig. 1 entsprechende Teile sind mit den gleichen Bezugszeichen versehen und werden im folgenden nicht nochmals erläutert. Die Fig. 3 zeigt die Hilfskraft-Bremsanlage mit ABS im unbetätigten Zustand.

Eine Antiblockierregelung bewirkt prinzipiell, daß, wenn eine bestimmte Verzögerungsschwelle an einem gebremsten Rad überschritten wird, der Radbremsdruck soweit verringert wird, bis eine zweite Verzögerungsschwelle an diesem Rad unterschritten wird. Hierfür kann es notwendig sein, den anstehenden Radbremsdruck bis auf Null abzubauen. Danach wird der Radbremsdruck wieder erhöht, bis entweder das betreffende Rad erneut überbremst wird oder der vom Fahrer vorgegebene Bremsdruck erreicht wird.

Daher ist gemäß Fig. 3 der manuell angesteuerte Bremskreis B mit einem Entlastungsventil 114, im dargestellten Fall ein elektromagnetisch betätigbares 3/2 Wegeventil, versehen, das in die Druckleitung 72 zwischen Geberzylinder 4 und zweiter Kolben-Zylinder-Anordnung 14 des Bremssattels 10 geschaltet und über eine Entlastungsleitung 116 mit dem Vorratsbehälter 58 verbunden ist. Das nur einmal im System vorhandene Entlastungsventil 114 verbindet wahlweise die Druckkammer 74 der zweiten Kolben-Zylinder-Anordnung 14 mit der zweiten Druckkammer 8 des Geberzylinders 4 oder mit dem Vorratsbehälter 58, und ist in seiner die Druckkammer 74 der zweiten Kolben-Zylinder-Anordnung 14 mit der zweiten Druckkammer 8 des Geberzylinders 4 verbindenden Stellung vorgespannt.

Der Fremdkraft-Bremskreis A ist für jedes zu regelnde Rad mit zwei Schaltventilen 118, 120, im dargestellten Fall elektromagnetisch betätigbare 2/2 Wegeventile mit Durchgangs- und Sperrstellung, versehen. Das erste Schaltventil 118 ist in die Druckleitung 66 zur ersten Kolben-Zylinder-Anordnung 12 des Bremssattels 10 geschaltet und derart vorgespannt, daß es in seiner Grundstellung die Druckleitung 52 zwischen der Hydraulikpumpe 54 und der Druckkammer 34 des Drosselventil 16 mit der Druckkammer 68 der ersten Kolben-Zylinder-Anordnung 12 verbindet. Zwischen dem ersten Schaltventil 118 und der Druckkammer 68 der ersten Kolben-Zylinder-Anordnung 12 zweigt eine Leitung 122 ab, die in einer mit dem Vorratsbehälter 58 verbundenen Sammelrücklaufleitung 124 mündet oder direkt mit dem Vorratsbehälter 58 verbunden ist. Das zweite Schaltventil 120 ist in die Leitung 122 geschaltet und in seine Schließstellung vorgespannt.

Wird im ABS-Betrieb der hydraulischen Hilfskraft-Bremsanlage eine Bremsung über das Bremspedal 2 eingeleitet, erkennt eine Sensorik (nicht dargestellt), daß der über den Fremdkraft-Bremskreis A bzw. den Bremskreis B im Bremssattel 10 anliegende Bremsdruck das gebremste Rad (nicht dargestellt) zum Blockieren bringt. Der Bremsdruck wird nun durch elektromagnetische Ansteuerung der Ventile 114, 118 und 120 geeignet eingestellt. Dazu wird das Entlastungsventil 114 in seine die Druckkammer 74 der zweiten Kolben-Zylinder-Anordnung 14 mit dem Vorratsbehälter 58 verbindende Stellung geschaltet, so daß der anstehende Druck zwischen der zweiten Druckkammer 8 des Geberzylinders 4 und dem Entlastungsventil 114 eingeschlossen wird, während der Bremsdruck in der Druckkammer 74 der zweiten Kolben-Zylinder-Anordnung 14 über die Entlastungsleitung 116 zum Vorratsbehälter 58 hin auf Null abgebaut wird.

Im Fremdkraft-Bremskreis A wird der in der Druckkammer 68 der ersten Kolben-Zylinder-Anordnung 12 anstehende Bremsdruck durch Schalten der Schaltventile 118, 120 reduziert, wobei durch Schalten des ersten Schaltventils 118 von seiner Durchgangsstellung in seine Sperrstellung der über die Hydraulikpumpe 54 und das Drosselventil 16 erzeugte Staudruck gegenüber der Druckkammer 68 der ersten Kolben-Zylinder-Anordnung 12 abgesperrt wird, während durch Schalten des zweiten Schaltventils 120 von seiner Sperrstellung in seine Durchgangsstellung die Druckkammer 68 der ersten Kolben-Zylinder-Anordnung 12 mit dem Vorratsbehälter 58 verbunden wird. Im Ergebnis wird der Bremsdruck in der Druckkammer 68 der ersten Kolben-Zylinder-Anordnung 12 zum Vorratsbehälter 54 hin abgebaut bis die Verzögerungsschwelle unterschritten wird, so daß das ursprünglich blockierte Rad wieder dreht.

Dreht das ursprünglich blockierte Rad wieder, wird die elektromagnetische Ansteuerung der Ventile 114, 118 und 120 unterbrochen, so daß die Ventile 114, 118 und 120 jeweils in ihre vorgespannte Grundstellung zurückkehren und im Bremssattel 10 wie unter Bezugnahme auf die Fig. 1 beschrieben durch den Fremdkraft-Bremskreis A und den Bremskreis B eine der Betätigungskraft proportionale Bremskraft aufgebracht wird. Es stellt sich ein Regelvorgang ein, der während der antiblockiergeregelten Bremsung andauert, wobei durch den beschriebenen Aufbau der Hilfskraft-Bremsanlage mit den Ventilen 114, 118 und 120 keine nennenswerten Regelungsdruckstöße auf das Bremspedal 2 zurückwirken. Insbesondere wird unabhängig von der Schaltstellung der Schaltventile 118 und 120 im Fremdkraft-Bremskreis A der Staudruck erzeugt, der somit unverändert über den Steuerkreis C an das Bremspedal 2 zurückgemeldet wird, so daß auch im ABS-Betrieb der Hilfskraft-Bremsanlage ein gutes Pedalgefühl gewährleistet ist.

Gemäß dem in Fig. 4 dargestellten dritten Ausführungsbeispiel ist die Hilfskraft-Bremsanlage nach Fig. 1 bzw. Fig. 3 mit weiteren Bauelementen versehen, um eine Antischlupfregelung (ASR) und eine Fahrdynamikregelung zu ermöglichen. Den Teilen in den Fig. 1 und 3 entsprechende Teile sind mit den gleichen Bezugszeichen versehen und werden im folgenden nicht nochmals erläutert. Die Fig. 4 zeigt die Hilfskraft-Bremsanlage mit ASR bzw. Fahrdynamikregelung im unbetätigten Zustand.

Eine Antischlupfregelung bewirkt prinzipiell, daß, wenn beispielsweise beim Anfahren eines Kraftfahrzeugs die Reibbeiwerte eines angetriebenen Rads zum Untergrund zu gering sind, also eine Beschleunigungsschwelle überschritten wird, dieses Rad solange angebremst wird, bis eine zweite Beschleunigungsschwelle unterschritten wird, so daß sich das Rad wieder in einem zulässigen Schlupfbereich bewegt. Bei einer Fahrdynamikregelung hingegen, die prinzipiell auf die Erhaltung der Längsstabilität des Kraftfahrzeugs, meßbar über den Gierwinkel zwischen der Längsachse des Kraftfahrzeugs und der momentanen Fahrtrichtung, abstellt, werden in kritischen Fahrzuständen, wie beispielsweise Untersteuern, Übersteuern oder Bremsen während schneller Kurvenfahrt, die auftretenden Giermomente, die zu einem Ausbrechen oder Schleudern des Kraftfahrzeugs führen können, u.a. durch Anbremsen eines oder mehrerer Räder korrigiert.

Für eine derartige Regelung muß somit die Modulation des Bremsdrucks an einzelnen Rädern möglich sein. Dies wird mit Hilfe der vorstehend beschriebenen Ventile 118 und 120, die für jedes Rad vorgesehen sind, sowie eine zusätzliche elektromagnetische Ansteuerung des Drosselventils 16 gewährleistet. Zur elektromagnetischen Ansteuerung des Drosselventils 16 weist dieses einen Elektromagneten 126 auf, der unabhängig von der Betätigung des Bremspedals 2 angesteuert werden kann. Der Elektromagnet 126 ist mit dem Steuerkolben 40 des Drosselventils 16 wirkverbunden, so daß der Steuerkolben 40 durch Ansteuerung des Elektromagneten 126 axial definiert verschoben werden kann, wofür der Elektromagnet 126 als Proportionalmagnet mit entsprechender Strom-Kraft-Charakteristik ausgeführt ist. Über den Elektromagneten 126 kann der Steuerkolben 40 somit kraftabhängig steuerbar verschoben werden, wobei sich der Ventilspalt 48 des Drosselventils 16 bei Strombeaufschlagung des Elektromagneten 126 bzw. Krafterhöhung verkleinert und bei Wegnahme des Stroms durch die Kraft der Rückstellfeder 50 des Drosselventils 16 sowie den am Ventilkörper 36 wirkenden Staudruck vergrößert.

Im Ergebnis ist es möglich, mit entsprechender Sensorik bereits eingeleiteten Über- oder Falschreaktionen des Fahrers beim Führen des Kraftfahrzeugs selbsttätig entgegenzuwirken, bevor der Fahrer den kritischen Zustand des Kraftfahrzeugs wahrgenommen hat und das Bremspedal 2 betätigt. Es versteht sich von selbst, daß bei den hier angesprochenen Bremssituationen mit Antischlupf- bzw. Fahrdynamikregelung, bei welchen der Fahrer nicht aktiv beteiligt ist, im Bremskreis B kein Druck aufgebaut wird, weshalb das Entlastungsventil 114 nicht angesteuert werden muß und in seiner Grundstellung verbleibt.

Für den Fachmann ist ersichtlich, daß die Schaltvarianten der Bremsanlage gemäß den Fig. 1 und 3 in Abhängigkeit von der Anzahl der zu bremsenden Räder, der Art der an den Rädern vorgesehenen Zuspannorgane, den Sicherheitsvorgaben und den gewünschten Regelungsmöglichkeiten den jeweiligen Erfordernissen entsprechend miteinander kombiniert werden können.

### Bezugszeichenliste

- 2: Bremspedal
- 4: Geberzylinder
- 6: erste Druckkammer
- 8: zweite Druckkammer
- 10: Bremssattel
- 12: erste Kolben-Zylinder-Anordnung
- 14: zweite Kolben-Zylinder-Anordnung
- 16: Drosselventil
- 18: Kolbenstange
- 20: erster Kolben
- 22: zweiter Kolben
- 24: Anschluß
- 26: Ausgleichsbehälter
- 28: Steuerleitung
- 30: Steuerkammer
- 32: Ablaufkammer
- 34: Druckkammer
- 36: Ventilkörper
- 38: Wandung
- 40: Steuerkolben
- 42: Wandung
- 44: Durchgangsbohrung
- 46: Dichtsitz
- 48: Ventilspalt
- 50: Rückstellfeder
- 52: Druckleitung
- 54: Hydraulikpumpe
- 56: Ansaugleitung
- 58: Vorratsbehälter
- 60: Rückschlagventil
- 62: Rücklaufleitung
- 64: Druckhalteventil
- 66: Druckleitung
- 66': Abzweig
- 68: Druckkammer
- 70: Kolben
- 72: Druckleitung
- 72': Abzweig
- 74: Druckkammer
- 76: Kolben
- 78: Bremsbelag
- 80: Bremsscheibe
- 82: Pedalschalter
- 84: elektro-hydraulischer Druckschalter

- 86: Gehäuse
- 88: Ringkammer
- 90: Ringkolben
- 92: Zapfen
- 94: Boden
- 96: zylindrische Kammer
- 98: Dichtelement
- 100: Nut
- 102: Außenumfangsfläche
- 104: Dichtelement
- 106: Nut
- 108: Innenumfangsfläche
- 110: Endabschnitt
- 112: Manschette

- 114: Entlastungsventil
- 116: Entlastungsleitung
- 118: erstes Schaltventil
- 120: zweites Schaltventil
- 122: Leitung
- 124: Sammelrücklaufleitung
- 126: Elektromagnet

- A: Fremdkraft-Bremskreis
- B: Bremskreis
- C: Steuerkreis

## Patentansprüche

1. Hydraulische Bremsanlage, insbesondere für Kraftfahrzeuge, mit einem an einer Betätigungseinrichtung (2) angeschlossenen Geberzylinder (4), der nur zwei Druckkammern (6, 8) aufweist, und mindestens einem Zuspannorgan (10), welches zwei Kolben-Zylinder-Anordnungen (12, 14) hat, wobei die erste Kolben-Zylinder-Anordnung (12) in einem Servokraft-Bremsbetrieb mittelbar und die zweite Kolben-Zylinder-Anordnung (14) direkt über den Geberzylinder (4) ansteuerbar ist, um am Zuspannorgan (10) auch bei Ausfall der Servokraft eine Bremskraft aufzubringen, **dadurch gekennzeichnet, daß** die erste Druckkammer (6) des Geberzylinders (4) ausschließlich der hydraulischen Ansteuerung eines im Servokraft-Bremsbetrieb von einem Druckmittel zwangsdurchströmten Drosselventils (16) dient, um dessen Drosselquerschnitt zur Erzeugung eines definierten Staudrucks einzustellen, der der ersten Kolben-Zylinder-Anordnung (12) des Zuspannorgans (10) anlegbar ist, während die zweite Druckkammer (8) des Geberzylinders (4) von den Kolben-Zylinder-Anordnungen (12, 14) dieses Zuspannorgans (10) nur mit der zweiten Kolben-Zylinder-Anordnung (14) hydraulisch verbindbar ist.

2. Bremsanlage nach Anspruch 1, **dadurch gekennzeichnet, daß** die erste und die zweite Kolben-Zylinder-Anordnung (12, 14) des Zuspannorgans (10) konzentrisch zueinander angeordnet sind, wobei ein Gehäuse (86) des Zuspannorgans (10) eine Ringkammer (88) aufweist, in der unter Ausbildung der Druckkammer der einen Kolben-Zylinder-Anordnung (12; 14) ein Ringkolben (90) gleitbeweglich angeordnet ist, der mit einem von der Ringkammer (88) konzentrisch umgebenen Zapfen (92) des Gehäuses (86) eine zylindrische Kammer (96) begrenzt, um die Druckkammer der anderen Kolben-Zylinder-Anordnung (14; 12) auszubilden.

3. Bremsanlage nach Anspruch 1 oder 2, **dadurch gekennzeichnet, daß** zwischen der zweiten Druckkammer (8) des Geberzylinders (4) und der zweiten Kolben-Zylinder-Anordnung (14) des Zuspannorgans (10) ein Entlastungsventil (114) angeordnet ist, welches wahlweise die zweite Kolben-Zylinder-Anordnung (14) mit der zweiten Druckkammer (8) oder mit einem Vorratsbehälter (58) verbindet, während in einem mit dem Staudruck beaufschlagbaren Abschnitt zwischen dem Drosselventil (16) und der ersten Kolben-Zylinder-Anordnung (12) des Zuspannorgans (10) zwei Schaltventile (118, 120) vorgesehen sind, von denen das erste Schaltventil (118) die Verbindung zwischen dem Drosselventil (16) und der ersten Kolben-Zylinder-Anordnung (12) wahlweise unterbricht, und von denen das zweite Schaltventil (120) die erste Kolben-Zylinder-Anordnung (12) wahlweise mit dem Vorratsbehälter (58) verbindet.

4. Bremsanlage nach einem der vorhergehenden Ansprüche, **dadurch gekennzeichnet, daß** das Drosselventil (16) als Kugelsitzventil ausgebildet ist, wobei der Drosselquerschnitt des Drosselventils (16) durch Vergrößerung oder Verkleinerung eines Ventilspalts (48) zwischen einem kugelförmigen Ventilkörper (36) und einem ringförmigen Dichtsitz (46) einstellbar ist, der bei Erzeugung des Staudrucks von dem Druckmittel durchströmt wird.

5. Bremsanlage nach einem der vorhergehenden Ansprüche, **dadurch gekennzeichnet, daß** das Drosselventil (16) einen Elektromagneten (126) aufweist, mittels dessen der Drosselquerschnitt des Drosselventils (16) unabhängig von der Betätigungseinrichtung (2) einstellbar ist.

## Claims

1. Hydraulic braking system, particularly for motor vehicles, having a master cylinder (4) connected to an actuating device (2) and which only has two pressure chambers (6, 8), and at least one brake caliper (10), which has two piston-cylinder arrangements (12, 14), the first piston-cylinder arrangement (12) in a servo-force braking operation being indirectly controllable and the second piston-cylinder arrangement (14) directly controllable by means of the master cylinder (4), in order to apply to the brake caliper (10) a braking force even if the servo-force fails, **characterized in that** the first pressure chamber (6) of the master cylinder (4) is used exclusively for the hydraulic control of a flow control valve (16) through which there is a forced pressure medium flow in servo-force braking operation in order to adjust its regulating cross-section for producing a defined dynamic pressure, which can be applied to the first piston-cylinder arrangement (12) of the brake caliper (10), whereas the second pressure chamber (8) of the master cylinder (4) is the piston-cylinder arrangements (12, 14) of said brake caliper (10) is only hydraulically connectable with the second piston-cylinder arrangement (14).

2. Braking system according to claim 1, **characterized in that** the first and second piston-cylinder arrangements (12, 14) of the brake caliper (10) are positioned concentrically to one another, a housing (86) of the brake caliper (10) having an annular chamber (88) in which is slidably movable an annular piston (90) for forming the pressure chamber of one piston-cylinder arrangement (12, 14) and which defines with a pivot (92) of the housing (86) concentrically enclosing said annular chamber (88) defines a cylindrical chamber (96) in order to form the pressure chamber of the other piston-cylinder arrangement (14, 12).

3. Braking system according to claim 1 or 2, **characterized in that** between the second pressure chamber (8) of the master cylinder (4) and the second piston-cylinder arrangement (14) of the brake caliper (10) is provided a relief valve (114), which, as desired, links the second piston-cylinder arrangement (14) with the second pressure chamber (8) or with a reservoir (58), whereas in a section subject to the action of the dynamic pressure between the flow control valve (16) and the first piston-cylinder arrangement (12) of the brake caliper (10) are provided two on/off valves (118, 120), whereof the first on/off valve (118), as desired, interrupts the connection between the flow control valve (16) and the first piston-cylinder arrangement (12) and where of the second on/off valve (120), as desired, links the first piston-cylinder arrangement (12) with the reservoir (58).

4. Braking system according to one of the preceding claims, **characterized in that** the flow control valve (16) is constructed as a ball check valve, the regulating cross-section of the flow control valve (16) being adjustable by increasing or decreasing the size of a valve passage (48) between a spherical valve body (36) and an annular sealing seat (46), through which flows the pressure medium on producing the dynamic pressure.

5. Braking system according to one of the preceding claims, **characterized in that** the flow control valve (16) has an electromagnetic (126) by means of which the regulating cross-section of the flow control valve (16) can be adjusted independently of the actuating device (2).

## Revendications

1. Système de freinage hydraulique, en particulier pour véhicules automobiles, comprenant un maître-cylindre (4) qui est raccordé à un dispositif d'actionnement (2) et qui comporte seulement deux chambres de pression (6, 8), et au moins un organe d'application de frein (10) qui a deux dispositifs piston-cylindre (12, 14), le premier dispositif piston-cylindre (12) étant apte à être commandé en mode de freinage assisté indirectement et le second (14) directement par l'intermédiaire du maître-cylindre (4) pour appliquer une force de freinage sur l'organe (10) même en cas de défaillance de la force d'assistance, **caractérise en ce que** la première chambre de pression (6) du maître-cylindre (4) sert uniquement à la commande hydraulique d'une soupape d'étranglement (16) traversée par un courant forcé d'un agent de pression, en mode de freinage assisté, afin de régler la section d'étranglement de ladite soupape d'étranglement pour produire une pression dynamique définie applicable au premier dispositif piston-cylindre (12) de l'organe d'application de frein (10), tandis que la seconde chambre de pression (8) du maître-cylindre (4) ne peut être reliée par voie hydraulique qu'au second dispositif piston-cylindre (14) de l'organe d'application de frein (10).

2. Système de freinage selon la revendication 1, **caractérisé en ce que** les premier et second dispositifs piston-cylindre (12, 14) de l'organe d'application de frein (10) sont disposés de manière concentrique, une enveloppe (86) de l'organe d'application de frein (10) comportant une chambre annulaire (88) dans laquelle est disposé, en formant la chambre de pression d'un dispositif piston-cylindre (12 ; 14), un piston annulaire coulissant (90) qui délimite avec un tourillon (92) de l'enveloppe (86) entouré par la chambre annulaire (88) de manière concentrique une chambre cylindrique (96) pour former la chambre de pression de l'autre dispositif piston-cylindre (14 ; 12).

3. Système de freinage selon la revendication 1 ou 2, **caractérisé en ce qu'**il est prévu, entre la seconde chambre de pression (8) du maître-cylindre (4) et le second dispositif piston-cylindre (14) de l'organe d'application de frein (10), une soupape de trop-plein (114) qui relie sélectivement le second dispositif piston-cylindre (14) à la seconde chambre de pression (8) ou à un réservoir (58), tandis qu'il est prévu dans une section apte à être sollicitée par la pression dynamique, entre la soupape d'étranglement (16) et le premier dispositif piston-cylindre (12) de l'organe d'application de frein (10), deux soupapes de commande (118, 120), la première (118) interrompant sélectivement la liaison entre la soupape d'étranglement (16) et le premier dispositif piston-cylindre (12) tandis que la seconde (120) relie sélectivement le premier dispositif piston-cylindre (12) au réservoir (58).

4. Système de freinage selon l'une des revendications précédentes, **caractérisé en ce que** la soupape d'étranglement (16) est conçue comme une soupape sphérique à siège, sa section d'étranglement étant réglable grâce à l'agrandissement ou à la réduction d'une fente de soupape (48) entre un corps de soupape sphérique (36) et un siège d'étanchéité annulaire (46), qui est traversée par l'agent sous pression lors de la production de la pression dynamique.

5. Système de freinage selon l'une des revendications précédentes, **caractérisé en ce que** la soupape d'étranglement (16) comporte un électro-aimant (126) à l'aide duquel sa section d'étranglement est réglable indépendamment du dispositif d'actionnement (2).
